# FASCICULE DE BREVET EUROPEEN

(11) **EP 2 932 735 B1**
(45) Date de publication et mention de la délivrance du brevet: **06.03.2024**
(21) Numéro de dépôt: 13808106.2
(22) Date de dépôt: 25.11.2013
(51) Int. Cl.: H04W 4/80, H04B 5/00, H04B 5/02

(54) **SYSTEME POUR ECHANGER DES DONNEES A DISTANCE AVEC UNE RADIO-ETIQUETTE NFC**
SYSTEM FÜR REMOTE-DATENAUSTAUSCH MIT EINEM NFC-FUNKETIKETT
SYSTEM FOR EXCHANGING DATA REMOTELY WITH AN NFC RADIO TAG

(30) Priorité: 14.12.2012 FR 1262080
(43) Date de publication de la demande: 21.10.2015
(73) Titulaire: Schneider Electric Industries SAS, 92500 Rueil-Malmaison (FR)
(72) Inventeur: CHICHE, Thierry, F-38050 Grenoble Cedex 09 (FR); GASSION, Romain, F-38050 Grenoble Cedex 09 (FR)
(74) Mandataire: Schneider Electric
(86) Numéro de dépôt international: PCT/FR2013/052842
(87) Numéro de publication internationale: WO 2014/091106

(56) Documents cités:
- WO-A1-2009/039419
- WO-A2-2006/116084
- WO-A2-2009/044228
- US-A1- 2008 252 426
- US-A1- 2011 210 830
- US-B1- 7 746 215
- US-B2- 6 895 252

## Description

### Domaine technique de l'invention

La présente invention se rapporte à un système pour échanger des données à distance avec une radio-étiquette, préférentiellement de type NFC.

### Etat de la technique

Les radio-étiquettes, comprenant une mémoire, un microprocesseur et une antenne, sont de plus en plus répandues. Celles-ci sont le plus souvent passives, c'est-à-dire qu'elles ne comportent aucune source pour alimenter leurs circuits internes. Leur antenne leur permet de capter les signaux électromagnétiques émis par une station de lecture/écriture placée à portée (à moins de 10 centimètres) et transforme ces signaux par technologie inductive en énergie électrique. La station de lecture/écriture alimente ladite radio-étiquette et communique avec elle en modulant le signal électromagnétique. Elle peut ainsi écrire des données dans la mémoire de la radio-étiquette et lire les données stockées dans ladite mémoire. Ces radio-étiquettes fonctionnent selon une technologie dite en champ proche (NFC pour "Near Field Communication").

Comme écrit ci-dessus, pour pouvoir lire des données dans la radio-étiquette ou y écrire des données, la station doit être positionnée à proximité de la radio-étiquette, c'est-à-dire à une distance de moins de 10 centimètres. Cependant, il se peut que la radio-étiquette soit placée dans un endroit peu accessible ou auquel l'on ne souhaite pas accéder à chaque fois qu'une communication doit être établie. Ce sera le cas par exemple d'une radio-étiquette placée à l'intérieur d'une armoire électrique maintenue fermée.

Le but de l'invention est donc de proposer un système permettant d'échanger des données avec une radio-étiquette du type décrit ci-dessus, à distance, c'est-à-dire avec une portée plus importante que celle normalement prévue pour ce genre de radio-étiquette.

La publication de brevet WO2006/116084 divulgue un système pour échanger des donnes entre une station de lecture et une radio-étiquette. Les données sont lues à partir de la mémoire de la radio-étiquette et stockées dans une mémoire cache.

### Exposé de l'invention

Ce but est atteint par un système pour échanger des données, à distance, entre une station de lecture et une radio-étiquette, ledit système comportant les caractéristiques définies par la revendication 1.

Selon une autre particularité, la liaison sans-fil fonctionne selon un protocole de communication de type ZIGBEE, ZIGBEE Green Power ou BLUETOOTH.

Selon une autre particularité, le premier ensemble est alimenté par une source d'alimentation choisie parmi une pile, une batterie ou un réseau de distribution électrique.

Selon une autre particularité, le deuxième ensemble est agencé pour être alimenté par technologie inductive par la station de lecture et/ou par une source d'alimentation choisie parmi une pile, une batterie ou un réseau de distribution électrique.

Selon une autre particularité, le premier ensemble comporte un organe de visualisation activé lorsqu'une communication est établie entre le premier ensemble et le deuxième ensemble.

Selon une autre particularité, le premier ensemble comporte un boîtier logeant l'interface de lecture et les premiers moyens de communication.

Selon une autre particularité, le deuxième ensemble comporte un boîtier, distinct du boîtier du premier ensemble, logeant les seconds moyens de communication et la radio-étiquette déportée.

### Brève description des figures

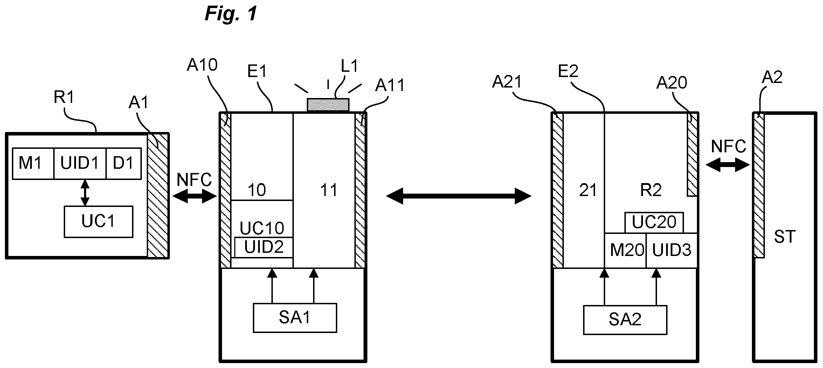

D'autres caractéristiques et avantages vont apparaître dans la description détaillée qui suit, faite en liaison avec- la figure 1 qui représente le système de l'invention permettant d'échanger des données à distance avec une radio-étiquette.

### Description détaillée d'au moins un mode de réalisation

L'invention concerne un système pour échanger des données à distance avec une radio-étiquette, préférentiellement de type NFC.

Dans la présente description il faut comprendre que l'échange de données consiste en la lecture de données mémorisées dans la radio-étiquette et dans l'écriture de données dans la radio-étiquette. Par "station de lecture" et "interface de lecture" d'une radio-étiquette, il faut donc comprendre que cette station et cette interface sont également capables d'écrire des données dans une radio-étiquette.

Une station de lecture pourra par exemple être implantée dans un terminal mobile, tel que par exemple un téléphone portable ou une tablette.

Une radio-étiquette est bien connue et communique par exemple selon une technologie en champ proche (NFC pour "Near Field Communication"). Une telle radio-étiquette comporte une mémoire M1 permettant de stocker un identifiant unique UID1 et des données D1, un microprocesseur UC1 permettant notamment de lire les données contenues dans la mémoire M1 et d'y écrire des données et une antenne A1 permettant de communiquer avec une station de lecture externe. La radio-étiquette est préférentiellement passive, c'est-à-dire qu'elle ne comporte pas de source interne pour alimenter ses circuits électroniques. Son antenne capte un signal électromagnétique émis par une antenne de la station de lecture positionnée à portée et, par technologie inductive, le convertit en énergie électrique à exploiter par ses circuits internes.

En référence à la figure 1, le système de l'invention est destiné à permettre l'échange de données à distance entre une radio-étiquette R1, dite principale, telle que décrite ci-dessus et une station de lecture ST. La radio-étiquette R1 principale est par exemple positionnée dans un endroit difficile d'accès ou dans un endroit maintenue fermée. Elle est par exemple attachée à un équipement et est destinée à stocker des données relatives à cet équipement.

Le système de l'invention comporte ainsi un premier ensemble E1 composé d'une interface de lecture 10 et de premiers moyens de communication 11. Ce premier ensemble est alimenté par une source d'alimentation SA1, composée par exemple d'une pile, d'une batterie ou d'un réseau de distribution électrique. Le premier ensemble E1 est positionné à proximité de la radio-étiquette R1 principale, c'est-à-dire à portée de celle-ci, de manière à ce que l'interface de lecture 10 puisse échanger des données avec la radio-étiquette R1 principale. L'interface de lecture 10 comporte une antenne A10 permettant de se coupler magnétiquement avec l'antenne A1 de la radio-étiquette R1 principale afin de l'alimenter et de communiquer avec elle et un microcontrôleur UC10 mémorisant un identifiant unique UID2 et lui permettant de commander la lecture des données mémorisées dans la radio-étiquette R1 principale ou l'écriture de données dans la radio-étiquette R1 principale.

L'interface de lecture 10 est connectée aux premiers moyens de communication 11 et son microcontrôleur UC10 est agencé pour commander l'envoi d'un ou plusieurs signaux par l'intermédiaire desdits premiers moyens de communication 11. Les premiers moyens de communication 11 peuvent communiquer par liaison filaire ou sans-fil. Préférentiellement, ces moyens de communication communiquent par liaison sans-fil et sont aptes à échanger des données suivant un protocole de communication déterminé, par exemple ZIGBEE, ZIGBEE Green Power ou BLUETOOTH.

Le premier ensemble E1 comporte par exemple un boîtier renfermant l'interface de lecture 10 et les premiers moyens de communication 11, ce boîtier étant destiné à être fixé à portée de la radio-étiquette R1 principale, à une distance suffisante pour que l'interface de lecture 10 soit en couplage magnétique avec la radio-étiquette R1 principale.

Le système de l'invention comporte un deuxième ensemble E2 comprenant des seconds moyens de communication 21 et une radio-étiquette R2, dite déportée, connectée aux seconds moyens de communication 21. La radio-étiquette R2 déportée, comme la radio-étiquette R1 principale, comporte un microprocesseur UC20 pour commander les seconds moyens de communication 21, une mémoire M20 pour mémoriser un identifiant unique UID3 et des données représentatives des signaux reçus par les seconds moyens de communication 21 et une antenne A20 pour communiquer avec la station de lecture ST. La radio-étiquette R2 déportée est agencée pour pouvoir commander les seconds moyens de communication 21 afin de pouvoir échanger des données avec l'interface de lecture 10 localisée dans le premier ensemble E1.

Les seconds moyens de communication 21 sont agencés pour communiquer avec les premiers moyens de communication 11 par liaison filaire, par exemple via un protocole série ou Ethernet, ou à travers une liaison sans-fil, via le protocole de communication adopté, par exemple ZIGBEE, ZIGBEE Green Power ou BLUETOOTH.

Le deuxième ensemble E2 comporte un boîtier renfermant la radio-étiquette R2 déportée et les seconds moyens de communication 21. Ce boîtier est positionné de manière à établir une communication avec le premier ensemble E1, via la liaison filaire ou sans-fil.

Le système est destiné à être positionné entre la radio-étiquette R1 principale et la station de lecture ST. La station de lecture ST est placée à portée de la radio-étiquette R2 déportée afin de pouvoir l'alimenter ainsi qu'échanger des données avec elle. L'interface de lecture 10 est pour sa part positionnée à portée de la radio-étiquette R1 principale afin de pouvoir y lire et/ou y écrire des données D1.

La station de lecture ST est associée à une interface homme-machine permettant de commander la lecture des données mémorisées dans la radio-étiquette R2 déportée et l'écriture de données dans cette radio-étiquette R2 déportée. Cette station de lecture ST est par exemple implantée dans un terminal mobile tel que décrit ci-dessus.

La radio étiquette R2 déportée est auto-alimentée par une énergie électrique générée par technologie inductive lorsque la station de lecture ST est approchée. Cette énergie électrique est préférentiellement employée pour alimenter également les seconds moyens de communication 21. Cependant, si sa quantité est insuffisante, il est possible d'alimenter, partiellement ou en totalité, les seconds moyens de communication 21 et/ou la radio-étiquette R2 déportée avec une autre source d'alimentation SA2, par exemple une pile, une batterie ou le réseau électrique.

Selon l'invention, la radio étiquette R2 déportée est préalablement associée à la radio-étiquette R1 principale de manière à n'échanger des données qu'avec la radio-étiquette R1 principale. La liaison entre la station de lecture ST et la radio-étiquette R1 principale est sécurisée en s'appuyant sur les capacités NFC des deux ensembles. La sécurisation de la communication sera réalisée par génération d'un jeton unique basé sur les identifiants uniques de la radio-étiquette R1 principale, de l'interface de lecture 10 et de la radio-étiquette R2 déportée.

Le système de l'invention fonctionne de la manière suivante :
Phase d'appairage/configuration :
La première étape consiste à appairer la radio-étiquette R1 principale attachée à un équipement avec l'interface de lecture 10 du premier ensemble. Pour cela :
- l'opérateur positionne l'interface de lecture 10 en mode appairage afin de stocker dans sa mémoire des informations sur l'équipement, par exemple sa description, une photo, sa position géographique.
- En approchant l'interface de lecture 10 de la radio-étiquette R1 principale, l'interface de lecture 10 récupère également l'identifiant unique UID1 de la radio-étiquette R1 principale.

La deuxième étape consiste à appairer le premier ensemble au deuxième ensemble. Pour cela :
- L'opérateur approche le premier ensemble E1 du deuxième ensemble E2 afin que l'interface de lecture 10 et la radio-étiquette R2 déportée échangent leur identifiant unique respectif et que l'interface de lecture 10 transmette également l'identifiant unique UID1 de la radio-étiquette R1 principale à la radio-étiquette R2 déportée. Les trois identifiants uniques UID1, UID2 et UID3 constituent le jeton d'appairage utilisé pour toute communication entre le premier ensemble E1 et le deuxième ensemble E2.
- La radio-étiquette R2 déportée peut également récupérer les informations de description de l'équipement.

Une fois l'appairage terminé, la communication entre la radio-étiquette R1 principale et la station de lecture ST commence par une phase d'initialisation, décrite ci-dessous :
- L'opérateur approche la station de lecture ST de la radio-étiquette R2 déportée, permettant d'alimenter, par induction via le NFC, les circuits électroniques de la radio-étiquette R2 déportée et d'activer les seconds moyens de communication 21.
- En approchant la station de lecture ST de la radio-étiquette R2 déportée, la communication entre les seconds moyens de communication 21 et les premiers moyens de communication 11 s'établit, permettant un échange des identifiants uniques UID1, UID2, UID3 pour vérification.
- En cas de non-correspondance entre les identifiants uniques, la communication entre la station de lecture ST et la radio-étiquette R1 principale ne sera pas possible. En cas de validation, la radio-étiquette R1 principale autorisera l'échange de données avec la station de lecture ST.

Après validation de la communication, les informations de description de l'équipement sont par exemple envoyées vers la station de lecture ST, par exemple pour affichage via une application dédiée exécutée sur la station. En variante de réalisation, ces informations peuvent s'afficher directement sur un écran associé à la radio-étiquette R2 déportée ou sur un écran présent sur l'interface de lecture 10. Selon l'invention, un organe de visualisation, par exemple une diode électroluminescente L1, est par exemple positionné sur le premier ensemble E1 de manière à signaler l'établissement de la communication.

Une fois la communication établie, de la radio-étiquette R1 principale jusqu'à la station de lecture ST, l'échange de données peut être réalisé selon deux modes de réalisation distincts.

Dans le premier mode de réalisation, les données mémorisées dans la radio-étiquette R1 principale sont reproduites intégralement dans la radio-étiquette R2 déportée. La radio-étiquette R2 déportée est donc l'image parfaite de la radio-étiquette R1 principale. L'interface de lecture 10 vient lire périodiquement les données mémorisées dans la radio-étiquette R1 principale et sont envoyées suivant la même période vers le deuxième ensemble E2 afin d'être écrite dans la mémoire de la radio-étiquette R2 déportée. Ainsi, lorsque l'opérateur approche la station de lecture ST de la radio-étiquette R2 déportée, c'est comme s'il approchait sa station ST de la radio-étiquette R1 principale. Le principe est le même en écriture de données dans la radio-étiquette R1 principale. Les données sont écrites dans la radio-étiquette R2 déportée et sont transférées périodiquement à la radio-étiquette R1 principale.

Dans le deuxième mode de réalisation, les échanges de données se font à la demande de la station de lecture ST. Les données écrites dans la radio-étiquette R2 déportée sont celles demandées par la station de lecture ST à la radio-étiquette R1 principale. Dans ce deuxième mode de réalisation, la station de lecture ST écrit une requête en lecture ou en écriture dans la radio-étiquette R2 déportée, ladite requête est transférée à l'interface de lecture 10, qui exécute alors la requête dans la radio-étiquette R1 principale. Dans le cas de la lecture de données, les informations lues sont renvoyées dans la radio-étiquette R2 déportée pour pouvoir être transmises à la station de lecture ST.

Selon l'invention, un même premier ensemble pourrait être dédié à plusieurs radio-étiquettes. Dans cette configuration, l'interface de lecture 10 comporte par exemple un tableau de correspondance lui permettant d'associer chaque radio-étiquette à une radio-étiquette déportée distincte.

Le système de l'invention présente donc de nombreux avantages listés ci-dessous :
- possibilité d'échanger des données avec une radio-étiquette, même si celle-ci est située dans un endroit à accès restreint ou difficile,
- solution quasi-autonome en énergie et active uniquement lorsque la station de lecture est approchée,
- compatibilité avec les protocoles de communication filaires ou sans-fils connus,
- sécurité de lecture grâce à l'appairage réalisé entre la radio-étiquette et la radio-étiquette déportée,
- facilité d'installation,
- compacité, car il ne requiert que deux ensembles,
- possibilité de conserver une station de lecture standard, telle que celle déjà présente dans les terminaux mobiles.

## Revendications

1. Système pour échanger des données, à distance, entre une station de lecture (ST) et une radio-étiquette (R1), dite principale, ledit système étant tel qu'il comporte :
- un premier ensemble (E1) comprenant une interface de lecture (10) agencée pour lire des données (D1) mémorisées et écrire des données dans la radio-étiquette principale (R1) et des premiers moyens de communication (11),
- un deuxième ensemble (E2) comprenant des seconds moyens de communication (21) reliés aux premiers moyens de communication (11) par une liaison sans-fil, et une radio-étiquette (R2), dite déportée, comprenant une mémoire (M20) agencée pour mémoriser des données reçues de la radio-étiquette principale (R1) ou à écrire dans la radio-étiquette principale (R1) via un échange de données à travers les premiers moyens de communication (11) et les seconds moyens de communication (21),
et étant tel qu'il est adapté pour :
- recevoir, via la radio-étiquette déportée (R2), une requête en écriture en provenance de la station de lecture (ST),
- transférer, via un échange de données par la liaison sans fil entre les premiers moyens de communications (11) et les seconds moyens de communication (21), ladite requête à l'interface de lecture (10), et,
- émettre ladite requête, via l'interface de lecture (10), à destination de la radio-étiquette principale (R1).

2. Système selon la revendication 1, **caractérisé en ce que** système est adapté pour:
- recevoir, via la radio-étiquette déportée (R2), une requête en lecture en provenance de la station de lecture (ST),
- transférer, via un échange de données par la liaison sans fil entre les premiers moyens de communications (11) et les seconds moyens de communication (21), ladite requête à l'interface de lecture (10),
- émettre ladite requête, via l'interface de lecture (10), à destination de la radio-étiquette principale (R1) et lire en réponse les données correspondant à la requête émise sur la radio-étiquette principale (R1),
- transférer, via un échange de données par la liaison sans fil entre les premiers moyens de communications (11) et les seconds moyens de communication (21), les données lues au deuxième ensemble (E2), et,
- transmettre, via la radio-étiquette déportée (R2), les données lues à la station de lecture (ST).

3. Système selon la revendication 1 ou 2, **caractérisé en ce que** la liaison sans-fil fonctionne selon un protocole de communication de type ZIGBEE, ZIGBEE Green Power ou BLUETOOTH.

4. Système selon l'une des revendications 1, 2 ou 3, **caractérisé en ce que** le premier ensemble (E1) est alimenté par une source d'alimentation (SA1) choisie parmi une pile, une batterie ou un réseau de distribution électrique.

5. Système selon l'une des revendications 1 à 4, **caractérisé en ce que** le deuxième ensemble (E2) est agencé pour être alimenté par technologie inductive par la station de lecture (ST) et/ou par une source d'alimentation (SA2) choisie parmi une pile, une batterie ou un réseau de distribution électrique.

6. Système selon l'une des revendications 1 à 5, **caractérisé en ce que** le premier ensemble (E1) comporte un organe de visualisation activé lorsqu'une communication est établie entre le premier ensemble (E1) et le deuxième ensemble (E2).

7. Système selon l'une des revendications 1 à 6, **caractérisé en ce que** le premier ensemble (E1) comporte un boîtier logeant l'interface de lecture (10) et les premiers moyens de communication (11).

8. Système selon la revendication 7, **caractérisé en ce que** le deuxième ensemble (E2) comporte un boîtier, distinct du boîtier du premier ensemble, logeant les seconds moyens de communication (21) et la radio-étiquette (R2) déportée.

## Patentansprüche

1. System für den Fernaustausch von Daten zwischen einer Lesestation (ST) und einem so genannten Haupt-Funketikett (R1), wobei das System so ist, dass es aufweist:
- eine erste Einheit (E1), die eine Leseschnittstelle (10), die geeignet ist, gespeicherte Daten (D1) zu lesen und Daten in das Haupt-Funketikett (R1) zu schreiben, und erste Kommunikationseinrichtungen (11) aufweist,
- eine zweite Einheit (E2), die zweite Kommunikationseinrichtungen (21), die über eine drahtlose Verbindung mit den ersten Kommunikationseinrichtungen (11) verbunden sind, und ein so genanntes ausgelagertes Funketikett (R2) enthält, das einen Speicher (M20) enthält, der eingerichtet ist, Daten zu speichern, die vom Haupt-Funketikett (R1) empfangen werden oder in das Haupt-Funketikett (R1) zu schreiben sind über einen Datenaustausch durch die ersten Kommunikationseinrichtungen (11) und die zweiten Kommunikationseinrichtungen (21),
und so ist, dass es geeignet ist:
- über das ausgelagerte Funketikett (R2) eine von der Lesestation (ST) kommende Schreibanforderung zu empfangen,
- über einen Datenaustausch durch die drahtlose Verbindung zwischen den ersten Kommunikationseinrichtungen (11) und den zweiten Kommunikationseinrichtungen (21) die Anforderung an die Leseschnittstelle (10) zu übertragen, und
- die Anforderung über die Leseschnittstelle (10) an das Haupt-Funketikett (R1) zu senden.

2. System nach Anspruch 1, **dadurch gekennzeichnet, dass** das System geeignet ist:
- über das ausgelagerte Funketikett (R2) eine von der Lesestation (ST) kommende Leseanforderung zu empfangen,
- über einen Datenaustausch durch die drahtlose Verbindung zwischen den ersten Kommunikationseinrichtungen (11) und den zweiten Kommunikationseinrichtungen (21) die Anforderung an die Leseschnittstelle (10) zu übertragen,
- die Anforderung über die Leseschnittstelle (10) an das Haupt-Funketikett (R1) zu senden und als Antwort die der auf dem Haupt-Funketikett (R1) gesendeten Anforderung entsprechenden Daten zu lesen,
- über einen Datenaustausch durch die drahtlose Verbindung zwischen den ersten Kommunikationseinrichtungen (11) und den zweiten Kommunikationseinrichtungen (21) die gelesenen Daten an die zweite Einheit (E2) zu übertragen, und
- über das ausgelagerte Funketikett (R2) die gelesenen Daten an die Lesestation (ST) zu übertragen.

3. System nach Anspruch 1 oder 2, **dadurch gekennzeichnet, dass** die drahtlose Verbindung gemäß einem Kommunikationsprotokoll des Typs ZIGBEE, ZIGBEE Green Power oder BLUETOOTH arbeitet.

4. System nach einem der Ansprüche 1, 2 oder 3, **dadurch gekennzeichnet, dass** die erste Einheit (E1) von einer Versorgungsquelle (SA1) versorgt wird, die aus einer Zelle, einer Batterie oder einem Stromverteilungsnetz ausgewählt wird.

5. System nach einem der Ansprüche 1 bis 4, **dadurch gekennzeichnet, dass** die zweite Einheit (E2) eingerichtet ist, um durch induktive Technologie durch die Lesestation (ST) und/oder durch eine Versorgungsquelle (SA2) versorgt zu werden, die aus einer Zelle, einer Batterie oder einem Stromverteilungsnetz ausgewählt wird.

6. System nach einem der Ansprüche 1 bis 5, **dadurch gekennzeichnet, dass** die erste Einheit (E1) ein Anzeigeelement aufweist, das aktiviert wird, wen eine Kommunikation zwischen der ersten Einheit (E1) und der zweiten Einheit (E2) aufgebaut wird.

7. System nach einem der Ansprüche 1 bis 6, **dadurch gekennzeichnet, dass** die erste Einheit (E1) ein Gehäuse aufweist, das die Leseschnittstelle (10) und die ersten Kommunikationseinrichtungen (11) aufnimmt.

8. System nach Anspruch 7, **dadurch gekennzeichnet, dass** die zweite Einheit (E2) ein Gehäuse aufweist, das sich vom Gehäuse der ersten Einheit unterscheidet, das die zweiten Kommunikationseinrichtungen (21) und das ausgelagerte Funketikett (R2) aufnimmt.

## Claims

1. A system for exchanging data, remotely, between a reading station (ST) and a so-called main radio tag (R1), said system being such that it comprises:
- a first assembly (E1) comprising a reading interface (10) design to read stored data (D1) and writing data to the main radio tag (R1) and first communication means (11),
- a second assembly (E2) comprising second communication means (21) linked by a wireless link to the first communication means (11), and a so-called offset radio tag (R2) comprising a memory (M20) designed to store data received from the main radio tag (R1) or to be written in the main radio tag (R1) via data exchange through the first communication means (11) and the second communication means (21),
and being such that it is adapted for:
- to receive, via the offset radio tag (R2), a write request from the reading station (ST),
- transfer, via an exchange of data by the wireless link between the first communication means (11) and the second communication means (21), said request to the reading interface (10), and,
- send said request, via the reading interface (10), to the main radio tag (R1).

2. The system according to claim 1, **characterized in that** the system is adapted to:
- receive, via the offset radio label (R2), a reading request from the reading station (ST),
- transfer, via an exchange of data by the wireless link between the first communication means (11) and the second communication means (21), said request to the reading interface (10),
- send said request, via the reading interface (10), to the main radio tag (R1) and read in response the data corresponding to the request sent on the main radio tag (R1),
- transfer, via an exchange of data by the wireless link between the first communication means (11) and the second communication means (21), the data read to the second assembly (E2), and,
- send, via the offset radio tag (R2), the data read to the reading station (ST).

3. The system according to claim 1 or 2, **characterized in that** the wireless link operates according to a ZIGBEE, ZIGBEE Green Power or BLUETOOTH type communication protocol.

4. The system according to one of claims 1, 2 or 3, **characterized in that** the first assembly (E1) is powered by a power source (SA1) chosen from a cell, a battery or an electrical distribution network.

5. The system according to one of claims 1 to 4, **characterized in that** the second assembly (E2) is arranged to be powered by inductive technology by the reading station (ST) and/or by a power source (SA2) chosen from a cell, a battery or an electrical distribution network.

6. The system according to one of claims 1 to 5, **characterized in that** the first assembly (E1) comprises a visualization unit activated when a communication is established between the first assembly (E1) and the second assembly (E2).

7. The system according to one of claims 1 to 6, **characterized in that** the first assembly (E1) comprises a housing accommodating the reading interface (10) and the first communication means (11).

8. The system according to claim 7, **characterized in that** the second assembly (E2) comprises a housing, distinct from the housing of the first assembly, accommodating the second communication means (21) and the offset radio tag (R2).
